# EUROPÄISCHE PATENTSCHRIFT

(11) **EP 1 135 017 B1**
(45) Veröffentlichungstag und Bekanntmachung des Hinweises auf die Patenterteilung: **28.05.2003**
(21) Anmeldenummer: 99962192.3
(22) Anmeldetag: 01.12.1999
(51) Int. Cl.: A01F 15/02

(54) **PRESSE ZUR HERSTELLUNG VON IM WESENTLICHEN QUADERFÖRMIGEN PRESSBALLEN AUS LANDWIRTSCHAFTLICHEM ERNTEGUT**
PRESS FOR PRODUCING ESSENTIALLY RECTANGULAR BALES OF HARVESTED AGRICULTURAL PRODUCE
PRESSE DE MISE EN BOTTES SENSIBLEMENT RECTANGULAIRES DE PRODUITS DE RECOLTE

(30) Priorität: 02.12.1998 DE 19855632
(43) Veröffentlichungstag der Anmeldung: 26.09.2001
(73) Patentinhaber: SACHT, Hans Otto, 48477 Hörstel-Riesenbeck (DE)
(72) Erfinder: SACHT, Hans Otto, 48477 Hörstel-Riesenbeck (DE)
(74) Vertreter: Pott, Ulrich, Dipl.-Ing.
(86) Internationale Anmeldenummer: EP9909346
(87) Internationale Veröffentlichungsnummer: WO00032028

(56) Entgegenhaltungen:
- DE-A- 4 042 027
- DE-C- 19 605 203
- US-A- 4 270 446

## Beschreibung

Die Erfindung betrifft eine Presse zur Herstellung von im wesentlichen quaderförmigen Preßballen aus landwirtschaftlichem Erntegut, insbesondere Halm- und/oder Blattgut, nach dem Oberbegriff des Anspruches 1.

Aus der US-PS 4,270,446 ist eine Presse bekannt, bei der das Erntegut von einer Gutaufnahmevorrichtung aufgenommen und von dieser einer Beschickungsvorrichtung zugeführt wird, die oberhalb der Gutaufnahmevorrichtung und unterhalb einer Preßkammer angebracht ist, wobei die Beschickungsvorrichtung das Erntegut vorverdichtet und von unten her der Preßkammer zuführt. Diese wird unterseitig von einem auf- und abrollbaren Rollboden, der einen Durchtrittsspalt offen läßt, abgeschlossen. Die Preßkammer ist an einer oberen Schwenkachse nach Art eines Pendels aufgehängt und wird während der Bildung eines Ballens alternierend oberhalb der Beschickungsvorrichtung bewegt.

Die DE 40 42 027 A1 zeigt eine Quaderpresse, bei der die Preßkammer auf Laufschienen horizontal beweglich gehalten ist, wobei der Boden der Preßkammer von einem unterseitigen Förderer gebildet ist. Die Preßkammer umfaßt bewegte Längs- und Querseitenwände sowie einen ebenfalls mitbewegten Deckelteil, der zudem eine Preßvorrichtung zur Verdichtung des eingebrachten Ernteguts umfaßt. Die mitbewegte Preßkammer weist daher ein hohes Gewicht auf, da sämtliche Seitenwände sowie der schwere Deckelteil bewegt werden müssen. Zusätzlich muß die Preßvorrichtung des Deckelteils mitbewegt werden, also etwa mehrere Hydraulikzylinder sowie eine schwere Platte, die zum Pressen geeignet ist. Dadurch ist der Energiebedarf für den Einsatz einer derartigen Quaderpresse sehr hoch. Durch das jeweilige Abbremsen der bewegten Masse an den Endpunkten der Bewegung entsteht eine unruhige Fahrt, die einwirkenden Kräfte übertragen sich bis in die Zugmaschine.

Der Erfindung liegt das Problem zugrunde, eine Presse für im wesentlichen quaderförmige Preßballen mit horizontaler Schichtung zu schaffen, deren Betriebseigenschaften verbessert sind.

Die Erfindung löst dieses Problem mit den Merkmalen des Anspruches 1. Hinsichtlich weiterer vorteilhafter Ausgestaltungen wird auf die Ansprüche 2 bis 34 verwiesen.

Dadurch, daß ein oberer Förderer ausgebildet ist, der die Preßkammer begrenzt, kann auf ein schweres mitzubewegendes Deckelteil verzichtet werden. Die bewegte Masse ist dadurch erheblich verringert.

Durch das Vorsehen sowohl eines oberen wie auch eines unteren Förderers, die die Preßkammer begrenzen, ist zur horizontal geradlinigen Bewegung der Preßkammer allein ein Umschalten der Richtung dieser Förderer erforderlich, die eine stationäre Anordnung haben. Bei relativ geringen, auf die Presse wirkenden Kräften sind kurze Taktzeiten zur Bildung der Preßballen erzielbar. Ein Ausschub eines fertigen Ballens kann ebenfalls über die ohnehin vorhandenen Förderer erfolgen, wobei für den Ausschub lediglich eine Querseitenwand in eine entsprechende Offenstellung zu bewegen ist, was den Ausschubvorgang ebenfalls beschleunigt.

Wenn in besonders vorteilhafter Ausgestaltung der Ausschubseite der Preßkammer eine Bindevorrichtung unmittelbar nachgeordnet ist, kann die Bindung des gebildeten Ballens noch auf der Presse erfolgen, ehe dieser dann - beispielsweise über eine Ablaufplatte - abgesetzt wird.

Wenn wie besonders vorteilhaft die Preßkammer im Bereich ihrer in Fahrtrichtung vorderen Umkehrstellung feststellbar ist und ein in der Preßkammer gebildeter Preßballen nach Öffnen der rückseitigen Querseitenwand durch die Förderer aus der Preßkammer heraus und durch die Bindevorrichtung hindurchbewegbar ist, kann während des Ausschiebens dieses Ballens bereits durch die Beschickungsvorrichtung weiteres Gut zugeführt werden, das dann in einen allseits und dabei rückseitig von dem auszuschiebenden Ballen begrenzten Raum gelangt. Dementsprechend können Ballenausschub und -bindung während des kontinuierlich durchlaufenden Betriebes von Aufnahmeund Beschickungsvorrichtung der Presse erfolgen, so daß ein kontinuierlicher Förderbetrieb möglich ist, der die Durchsatzleistung erheblich steigert.

Weitere Vorteile und Merkmale ergeben sich aus in der Zeichnung dargestellten Ausführungsbeispielen des Gegenstandes der Erfindung. In der Zeichnung zeigt:
- Fig. 1: eine teilweise aufgebrochene Seitenansicht einer erfindungsgemäßen Presse mit ober- und unterseitigen Walzenförderern,

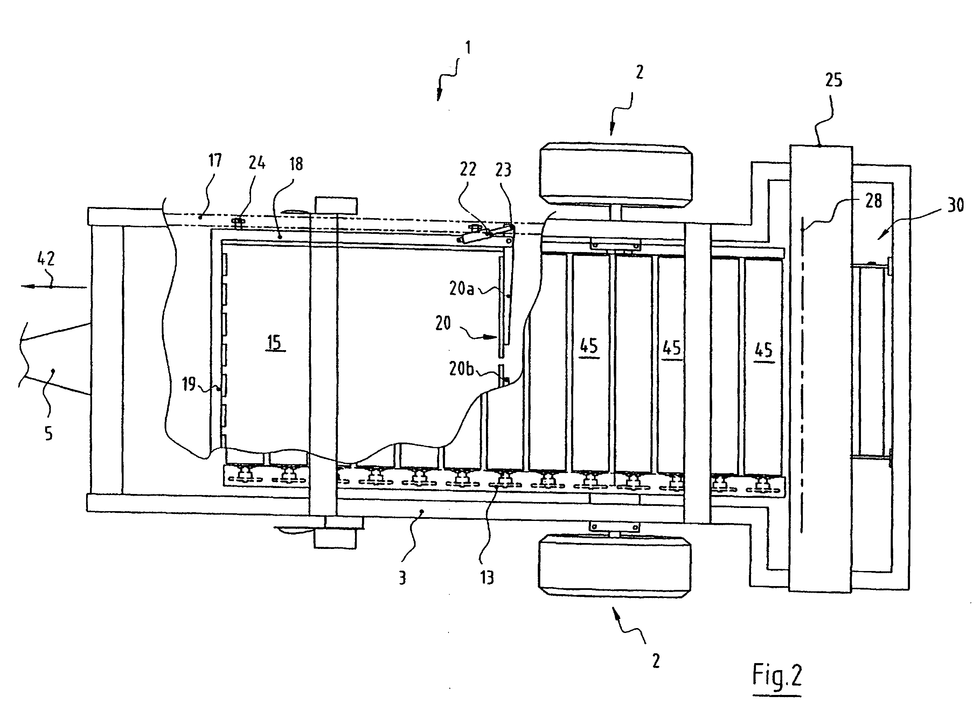

- Fig. 2: die Presse nach Fig. 1 in teilweise aufgebrochener Draufsicht,
- Fig. 3: eine ähnliche Ansicht wie Fig. 1 einer Presse mit einem oberseitigen Stabkettenförderer,
- Fig. 4: eine ähnliche Ansicht wie Fig. 1 nach dem Ausschub eines gebildeten Ballens in die Ebene der Bindevorrichtung und während der Weitereinförderung neuen Ernteguts,
- Fig. 5: eine ähnliche Ansicht wie Fig. 4 einer Presse mit nachgeordneter Stretchvorrichtung,
- Fig. 6: eine ähnliche Ansicht wie Fig. 1 einer Presse mit oberund unterseitigen Riemenförderern,
- Fig. 7: eine ähnliche Ansicht wie Fig. 1 einer Presse während des Betriebes mit im mittleren Bereich befindlicher Preßkammer,
- Fig. 8: eine ähnliche Ansicht wie Fig. 7 mit in vorderer Endposition befindlicher Preßkammer,
- Fig. 9: eine ähnliche Ansicht wie Fig. 8 mit in hinterer Endposition befindlicher Preßkammer,
- Fig. 10: eine ähnliche Ansicht wie Fig. 9 mit in vorderer Endposition befindlicher Preßkammer mit geöffneter rückseitiger Querseitenwand und ausgeschobenem fertigem Ballen, wobei eine Weitereinförderung von Erntegut stattfindet,
- Fig. 11: eine ähnliche Ansicht wie Fig. 10 mit weiter durch die Bindungsvorrichtung vorgeschobenem Ballen und weiterer Guteinförderung in den Zwischenraum zwischen fertigen Ballen und Preßkammer,
- Fig. 12: eine ähnliche Ansicht wie Fig. 11 bei Übergang des fertig gebundenen Ballens auf die Ablauframpe und Umschaltung der Förderer zur Einförderung des weiteren Gutes in die offenstehende Preßkammer,
- Fig. 13: eine ähnliche Ansicht wie Fig. 12 während des Absetzens des fertigen Ballens und nach vollständiger Rückführung des zwischengeförderten Gutes in die Preßkammer,
- Fig. 14: eine ähnliche Ansicht wie Fig. 13 nach Absetzen des fertigen Ballens und Schließen der rückwärtigen Querseitenwand der Preßkammer zur Bildung eines neuen Preßballens.

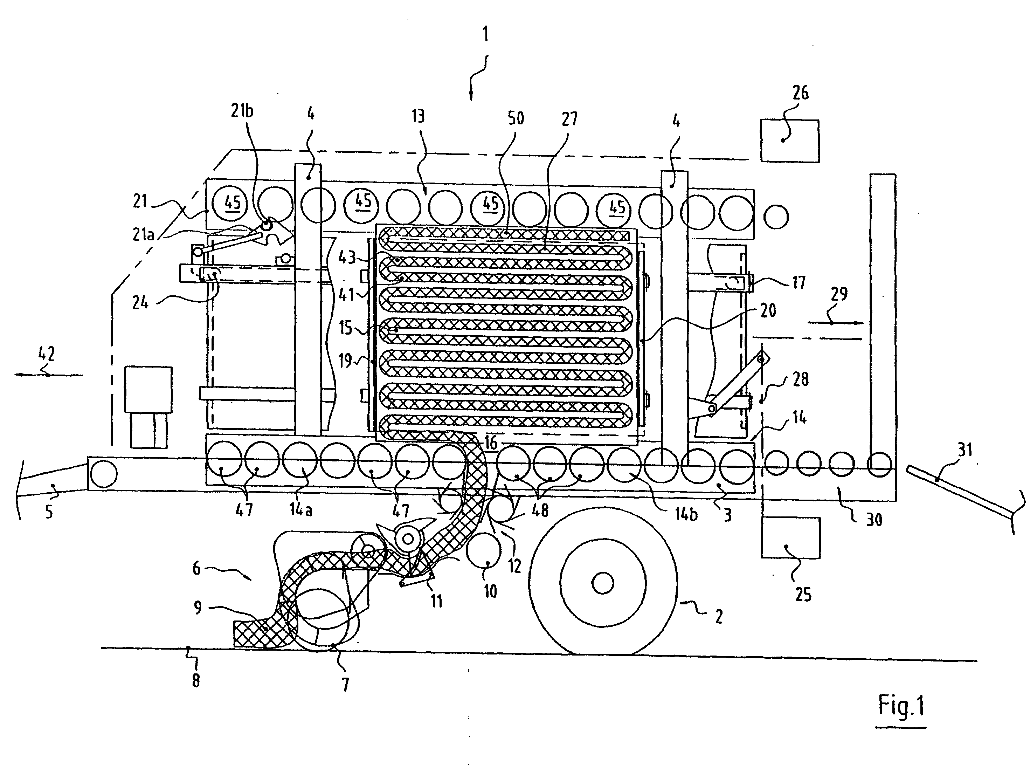

Die Presse 1 gemäß Fig. 1 ist als anhängbares Fahrzeug ausgebildet, kann jedoch auch eine stationäre Einheit oder insbesondere ein selbstfahrendes Fahrzeug bilden.

Die fahrbare Presse 1 weist ein zumindest einachsiges Fahrgestell 2 auf, das einen Maschinenrahmen 3 abstützt, der vertikale Stützen 4 trägt und vorderseitig mit einer Zugdeichsel 5 versehen ist. Weiterhin stützt der Maschinenrahmen 3 eine Aufnahmevorrichtung 6 mit einer Pick-up-Trommel 7 ab, die das vorzugsweise in Schwaden auf dem Boden 8 liegende Erntegut 9 aufnimmt und einer oder mehreren weiterführenden Förderwalzen 10 zuführt. Diese können mit ein- und ausklappbaren Schneidmessern 11 versehen sein und leiten das Erntegut 9 einer Beschickungsvorrichtung 12 zu, deren letztes Walzenpaar das Erntegut 9 einer Beschickungsöffnung 16 für das Erntegut 9 zuführt.

Von dem Maschinenrahmen 3 sind weiterhin abgestützt ein oberer Förderer 13 und ein unterer Förderer 14, die zwischen sich eine Preßkammer 15 zur Ballenbildung begrenzen. Der untere Förderer 14 ist aufgeteilt in einen ersten Teilförderer 14a und einen zweiten Teilförderer 14b, die zwischen sich die Beschickungsöffnung 16 für das Erntegut 9 in die Preßkammer 15 belassen. Die Beschickungsöffnung 16 kann dabei jedoch auch zwischen zwei Walzen ausgebildet sein, die den jeweils benachbarten Enden der Teilförderer 14a,14b zugeordnet sein können, wenn diese zum Beispiel von Stabkettenförderern gebildet sind.

Die Preßkammer 15 weist neben der ober- und unterseitigen Begrenzung durch die Förderer 13,14 seitliche Begrenzungen in Form einer vorderen Querseitenwand 19 sowie Längsseitenwänden 18 auf. Eine rückwärtige Begrenzungswand 20 der Preßkammer 15 ist aus einer den Innenraum der Preßkammer 15 begrenzenden Schließstellung in eine eine Ausschuböffnung für einen Preßballen 27 freigebende Offenstellung bewegbar. Hierzu ist die rückwärtige Querseitenwand 20 durch zwei mit den jeweils benachbarten Längsseitenwänden 18 gelenkig verbundene Klappen 20a,20b gebildet, die in Offenstellung mit den Längsseitenwänden 18 fluchten. Zur Überführung der Klappen 20a,20b zwischen der Offenstellung und der Schließstellung sind Antriebe 22 vorgesehen, beispielsweise Hydraulikzylinder, die die Schwenkbewegung der Klappen 20a und 20b um die vertikale Schwenkachse 23 gegenüber den Längsseitenwänden 18 bewirken. Sowohl in Offen- als auch in Schließstellung können die Klappen 20a und 20b arretierbar sein. Statt der Klappen 20a und 20b sind auch andere übliche zwischen einer Offen- und einer Schließstellung bewegbare Verschlußelemente möglich.

Die seitlichen Wandungen 18,19 und 20 der Preßkammer sind über Führungsrollen 24 in seitlichen Führungsschienen 17 gehalten, die an den vertikalen Stützen 4 des Maschinenrahmens 3 angeordnet sind. Die Seitenwände 18,19,20 der Preßkammer 15 sind daher freihängend zwischen diesen Führungsschienen 17 abgestützt. Die Führungsschienen 17 befinden sich in einem oberen Bereich der Preßkammer 15.

Im rückwärtigen Bereich der Presse 1 ist eine Bindevorrichtung 25 angeordnet, die den Förderern 13,14 unmittelbar nachgeordnet ist und deren Bindemittelspender 26 den vorrückenden Ballen 27 zur Einfassung in einer Querebene 28 umkreist. In Ballenausschubrichtung 29 ist dem unteren Förderer 14 ein hinter der Querebene 28 der Bindevorrichtung 25 gelegener Auslaufförderer 30 nachgeordnet, an den sich rückseitig eine Ablaufplatte 31 anschließt, die aus einer annähern senkrechten Transportstellung in eine abwärts geneigte Betriebsstellung für den Ablauf eines fertigen Ballens 27 schwenkbar ist. Hierfür ist ein eigener Antrieb vorzusehen. Dem oberen Förderer 13 kann hinter der Arbeitsebene 28 der Bindevorrichtung 25 eine Stützwalze 14' nachgeordnet sein, die den Ballen insbesondere vor Beginn des Bindens in Form hält.

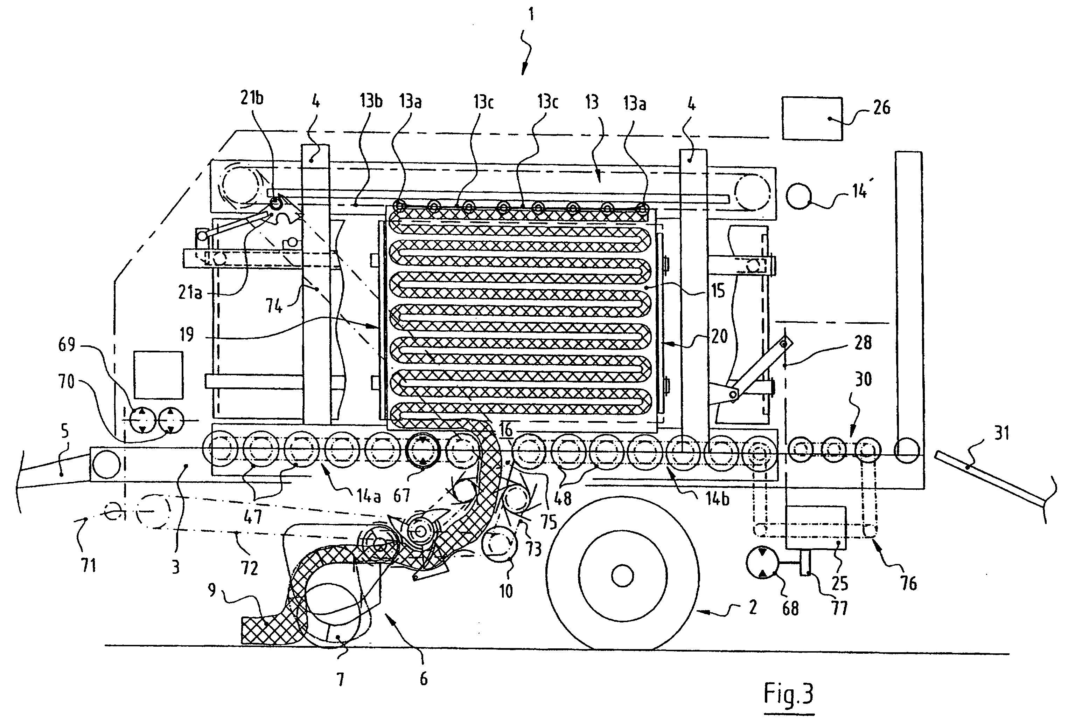

In Fig. 1 sind sowohl der obere Förderer 13 als auch der untere Förderer 14 mit seinen Teilförderern 14a und 14b als Walzenförderer ausgebildet. Gemäß Fig. 3 ist der obere Förderer 13 als Stabkettenförderer ausgebildet und weist hierfür einzelne Stäbe 13a auf, die entlang einer Kette 13b gehalten und mit dieser beweglich sind. Im Zwischenraum zwischen den Stäben 13a sind erforderlichenfalls Tuchelemente 13c vorgesehen, die die Zwischenräume zwischen den Stäben 13a abdecken. Während die Kette 13 umlaufend ist, genügt es, in einem kleinen Teilbereich, der jeweils oberhalb der Preßkammer 15 während der Bewegung liegt, Stäbe 13a anzuordnen, da deren relative Lage zur Preßkammer 15 immer gleich bleibt. Für den oberen Förderer 13 ist ein solcher Stabkettenförderer daher besonders günstig und gewichtssparend einzusetzen.

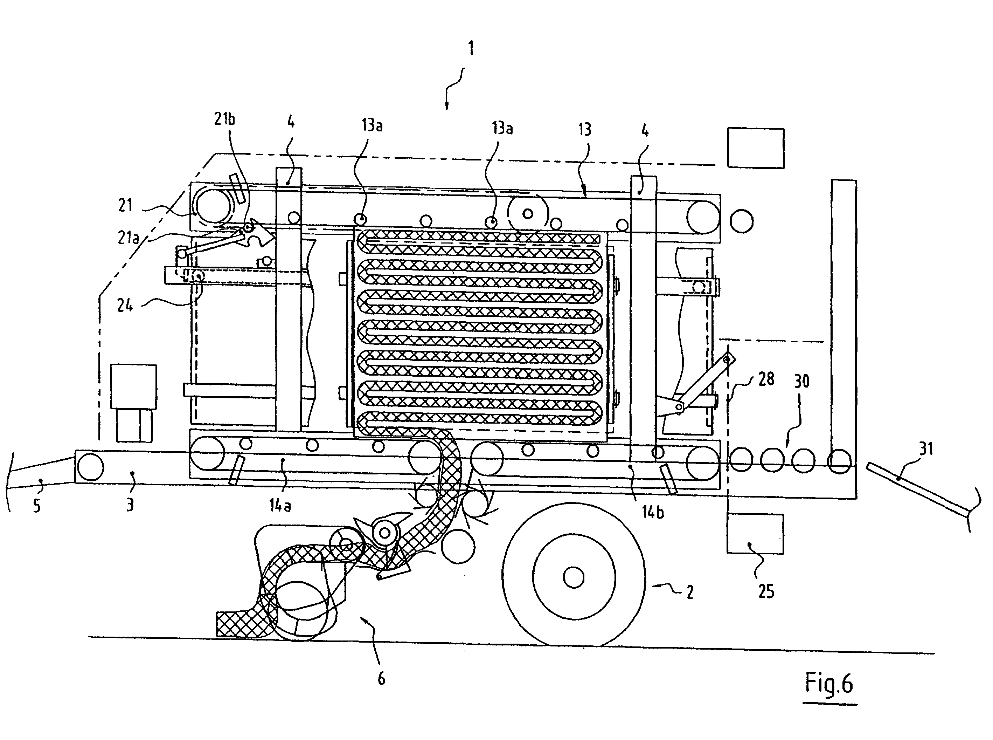

Im unteren Bereich der Presse 1 gemäß Fig. 3 ist wiederum ein Walzenförderer 14 vorgesehen. Alternativ ist es möglich, sowohl den oberen wie auch den unteren Förderer 13,14 als Stabkettenförderer auszubilden. Gemäß Fig. 6 sind sowohl der obere Förderer 13 als auch der untere Förderer 14 als Bandförderer ausgebildet. Auch Bandförderer lassen sich mit Walzenförderern oder Stabkettenförderern kombinieren. In jedem Fall müssen die oberen und unteren Förderer 13,14 - unabhängig, ob sie gleichartig oder unterschiedlich ausgebildet sind - während der Pressung einen hohen Druck auf die Preßkammer 15, die von den Förderern 13 und 14 ober- und unterseitig begrenzt wird, ausüben können. Zudem müssen sie die Förderung des jeweils an Ihnen anliegenden und die Begrenzungsschichten des Preßballens 27 bildenden Ernteguts bewirken.

Abweichend von den Zeichnungen ist auch möglich, daß die unteren Teilförderer 14a und 14b jeweils eine unterschiedliche Ausbildung aufweisen.

Während des Betriebes der Presse 1 wird diese mittels des Fahrgestells 2 über den Boden 8 verfahren und nimmt hierbei Erntegut 9 von diesem über die Aufnahmevorrichtung 6 auf. Das aufgenommene Erntegut 9 wird nach Weiterbeförderung von der Beschickungsvorrichtung 12 durch die Beschickungsöffnung 16, die zwischen den Teilförderern 14a und 14b angeordnet ist, welche die Preßkammer 15 unterseitig begrenzen, dieser zugeführt. Die Beschickungsöffnung 16 erstreckt sich hierbei im wesentlichen über die Breite der Preßkammer 15, so daß der gesamte Raum zwischen den Längsseitenwänden 18 mit Erntegut 9 anfüllbar ist.

Während des Einfüllens von Erntegut 9 wird die Preßkammer 15 mit ihren Seitenwänden 18,19,20 mittels des oberseitigen Förderers 13 alternierend bewegt. Hierfür kann beispielsweise ein besonderer endloser Kettentrieb 21 vorgesehen sein, mit dessen Mitnahmezapfen 21b die Preßkammer 15 mittels einer Mitnahmeklinke 21a kuppelbar ist. Zur Ein- und Auskupplung von Mitnahmeklinke 21a und Mitnahmezapfen 21b ist ein eigener Antrieb, z. B. ein Druckmittelzylinder, vorgesehen. Auch andere Antriebsmöglichkeiten für die alternierende Bewegung, beispielsweise ein Riemenantrieb oder ein an einem Rotationsrad befestigter Zugstangenantrieb, sind denkbar. Bei Ausbildung des oberen Förderers 13 als Stabkettenförderer kann der Mitnahmezapfen 21b von einem Querstab gebildet werden.

Während der Bildung des Preßballens 27 wird das eingefüllte Erntegut 9 zunächst durch Nachschieben von weiterem Gut 9 nach Anfüllung der Presskammer 15 verdichtet, wobei das durch die Beschickungsöffnung 16 nachfolgende Erntegut 9 während der alternierenden Bewegung der Preßkammer 15 entsprechend der horizontalen und geradlinigen Ausbildung dieser Bewegung jeweils eine neue horizontale Schicht 41 bei Verfahren der Preßkammer 15 in Fahrtrichtung 42 bzw. eine Schicht 43 bei gegenläufiger Bewegung der Preßkammer 15 ausbildet.

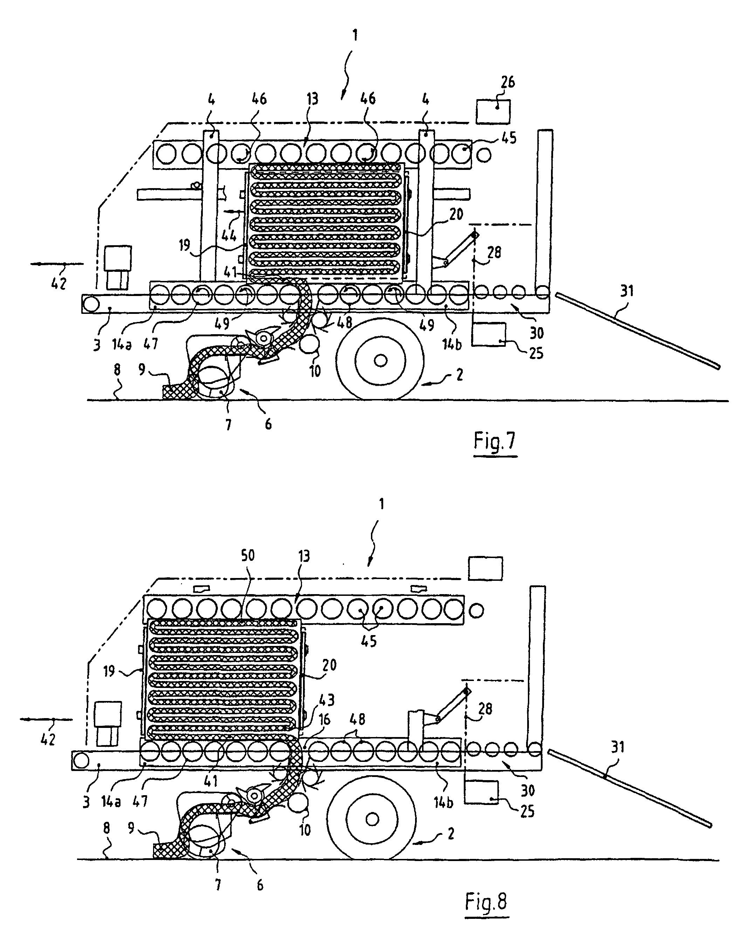

Der Verfahrensablauf ist in den Fig. 7 bis 14 dargestellt: Im Stadium gemäß Fig. 7 wird die Preßkammer 15 in Richtung des Pfeils 44 parallel zur Fahrtrichtung 42 verfahren, die Walzen 45 des oberen Förderers 13 werden dabei in Richtung der Pfeile 46 entsprechend einer Vorwärtsförderung des eingefüllten Materials bewegt, ebenso sind die Walzen 47 des ersten unteren Teilförderers 14a und 48 des zweiten unteren Teilförderers 14b gleichsinnig zueinander in Richtung der Pfeile 49 in Drehbewegung versetzt. Synchron mit der Drehbewegung der Walzen 47,48 der unteren Teilförderer 14a,14b sowie 45 des oberen Walzenförderers 13 werden die Seitenwände 18,19,20 in Richtung des Pfeils 44 unter Erfüllung der Abrollbedingung gegenüber den Walzen 45,47,48 verfahren, die Seitenwände laufen also nicht voraus oder nach. Entsprechendes gilt bei Verwendung von Stabketten- und/oder Riemenförderern.

Im Stadium nach Fig. 8 hat die Preßkammer 15 ihre vordere Endposition erreicht. In dieser Position sind die Walzen 45,47 und 48 im Stillstand, ehe unmittelbar auf diese Endposition folgend ihre Umlenkung in die entgegengesetzte Förderrichtung erfolgt.

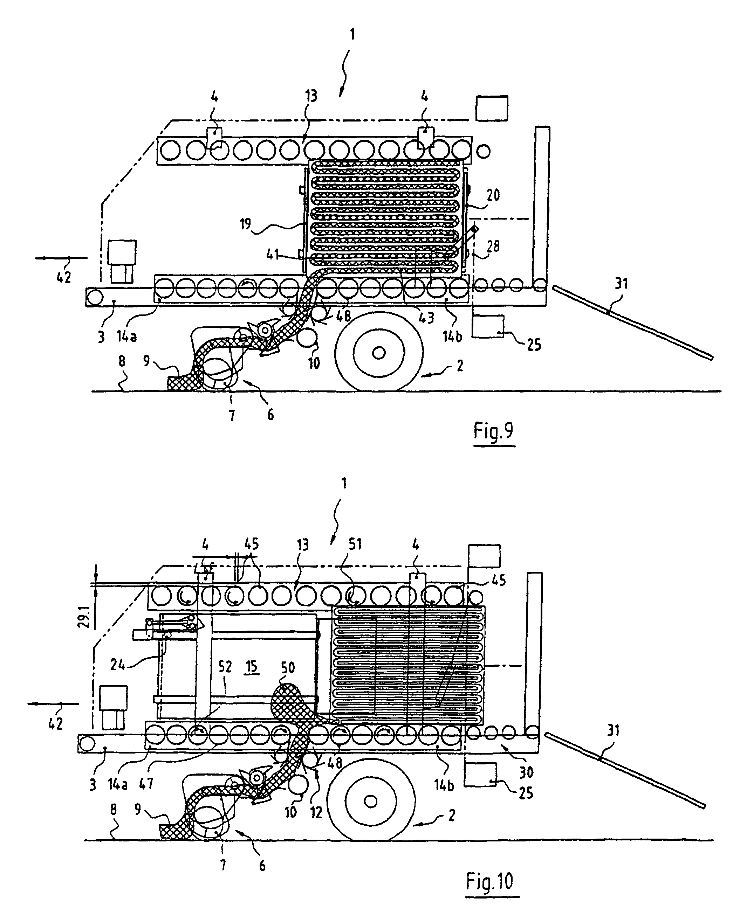

In der weiteren Ansicht gemäß Fig. 9 ist die Preßkammer 15 in ihre hintere Endposition verfahren. Unterhalb der in Vorwärtsfahrt der Preßkammer 15 gebildeten Schicht 41 ist eine weitere Schicht 43 entstanden, wobei in Umkehrung der Verhältnisse nach Fig. 7 die Walzen 47 und 48 der unteren Teilförderer 14a und 14b ebenso wie die Walzen 45 des oberen Förderers 13 gegenläufig zu den Pfeilen 46 und 49 bewegt wurden, ebenso wurde die Preßkammer beim Übergang zwischen Fig. 8 und Fig. 9 entgegen der Pfeilrichtung 44 verfahren.

In der vorderen Endposition gemäß Fig. 8 ist die Beschickungsöffnung 16 etwa mittig unterhalb der hinteren Querseitenwand 20, wohingegen in der hinteren Endposition der Preßkammer 15 gemäß Fig. 9 die vordere Querseitenwand 19 etwa mittig über der Beschickungsöffnung 16 liegt, wobei in beiden Fällen und auch zwischen den Endpositionen die Beschickungsöffnung 16 mit dem Innenraum der Preßkammer 15 in Verbindung bleibt und nicht von einer Querseitenwand 19 oder 20 vollständig überfahren wird.

Die geradlinige alternierende Bewegung der Preßkammer 15 gemäß den Darstellungen in Fig. 7 bis 9 wird so weit fortgeführt, bis ein hinreichender Preßdruck im Ballen erreicht ist, was beispielsweise über Drucksensoren feststellbar ist. Ein Steuerprogramm zur Ablaufsteuerung des Verfahrens der Presse 1 kann entweder mit festen Anzahlen von Bewegungszyklen arbeiten oder die Anzahl der Bewegungen der Menge des aufgenommenen Ernteguts anpassen, so daß je nach Anforderung die Bewegungszahl bis zur Fertigstellung eines Preßballens 27 variiert.

Hat der Preßballen 27 die erforderliche Dichte erreicht, so wird gemäß Fig. 10 die Preßkammer 15 in einer vorderen Ruheposition, die etwas hinter der Endposition während der alternierenden Bewegung liegt, arretiert, und die rückwärtige Querseitenwand 20 der Preßkammer 15 wird zum Ballenausschub in die Offenstellung verlagert. Der Ballen 27 wird durch Förderung der Walzen 45 des oberen Förderers 13 in Richtung der Pfeile 51 und der Walzen 47 bzw. 48 der unteren Teilförderer 14a und 14b in Richtung der Pfeile 52 aus der stillstehenden Preßkammer 15 heraus entgegen der Fahrtrichtung 42 des Fahrzeugs der Querebene 28, um die herum die Bindungsvorrichtung 25 wirksam ist, zugeführt, wobei der Vorschub getaktet erfolgt, so daß jeweils zueinander beabstandete Bindungen 53 des Ballens 27 gebildet werden. Weitere Ausschubhiffen, etwa Stempel oder dgl., sind entbehrlich. Der weitere Vorschub des Ballens 27 erfolgt durch einen nachgeordneten Ablaufförderer 30, der den fertigen Ballen 27 der Ablauframpe 31 zuführt, über den dieser auf dem Boden 8 absetzbar ist.

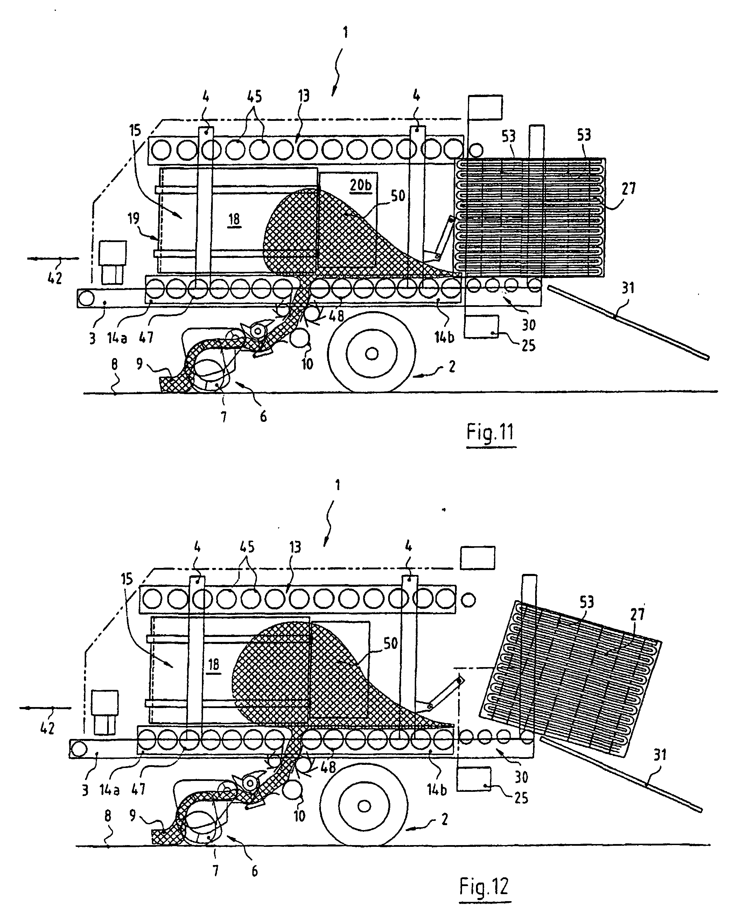

Während der Bindung und des Ausschubs des Preßballens 27 wird die Presse 1 insgesamt weiterhin in Richtung des Pfeils 42 verfahren, wobei eine weitere, im Idealfall unverminderte Aufnahme von Erntegut 9 erfolgt und der Beschickungsöffnung 16 zugeführt wird. In der Preßkammer 15 wird das bei geöffneter Preßkammer 15 eingefüllte Erntegut 50 in Seitenansicht von einer gleichmäßigen Verteilung abweichen (sh. Fig. 11 und 12). Das während der Bindung und des Ausschubs des Preßballens 27 eingefüllte Erntegut 50 füllt den Raum zwischen der vorderen Begrenzung des Preßballens 27 und der Preßkammer 15 an, deren rückseitige Querwand 20 weiterhin in Offenstellung verbleibt.

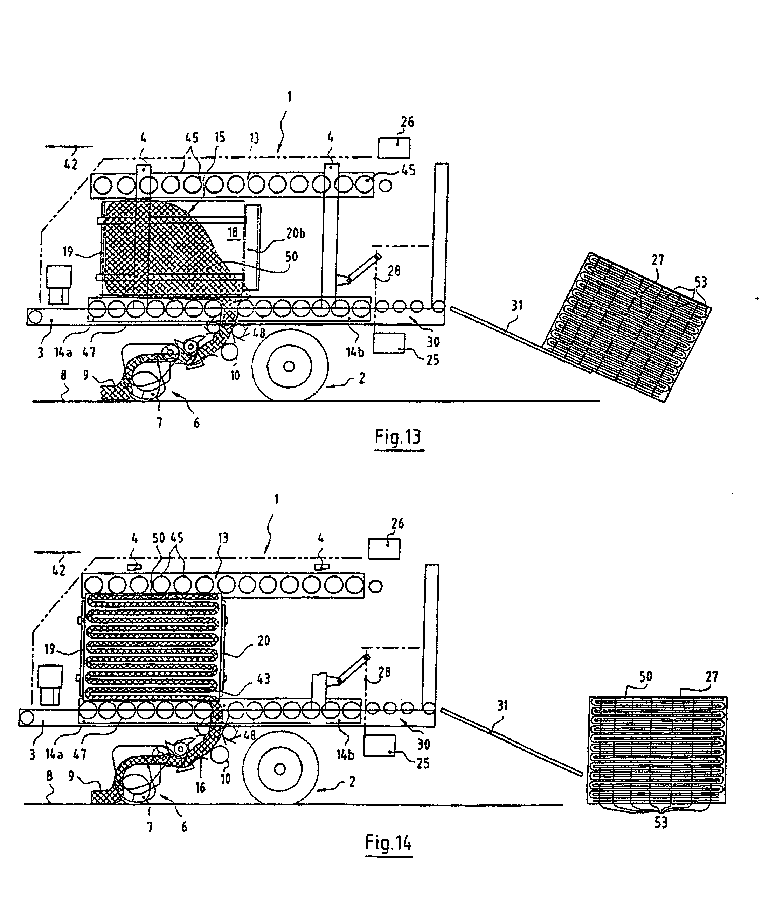

Sobald gemäß Fig. 12 der fertige Preßballen 27 seine Bindung abgeschlossen hat, werden die Förderwalzen 47,48 des unteren Förderers 14 sowie die Förderwalzen 45 des oberen Förderers 13 bzw. die entsprechenden Stabketten oder Förderbänder wieder entsprechend der in Fig. 7 eingezeichneten Richtung angetrieben, um dadurch das zwischenzeitlich eingefüllte Erntegut 50 in Richtung der Preßkammer 15 zu bewegen, die nach vollständiger Einfüllung des zwischenzeitlich aufgenommenen Guts 50 wieder geschlossen und aus ihrer arretierten vorderen Endstellung gelöst wird, so daß die alternierende Bewegung der Preßkammer 15 wiederum einsetzt und das zwischenzeitlich eingefüllte Gut 50 durch die während der alternierenden Bewegung erfolgende Pressung am Ende eine obere Lage des fertigen Preßballens 27 ausbildet (Fig. 14).

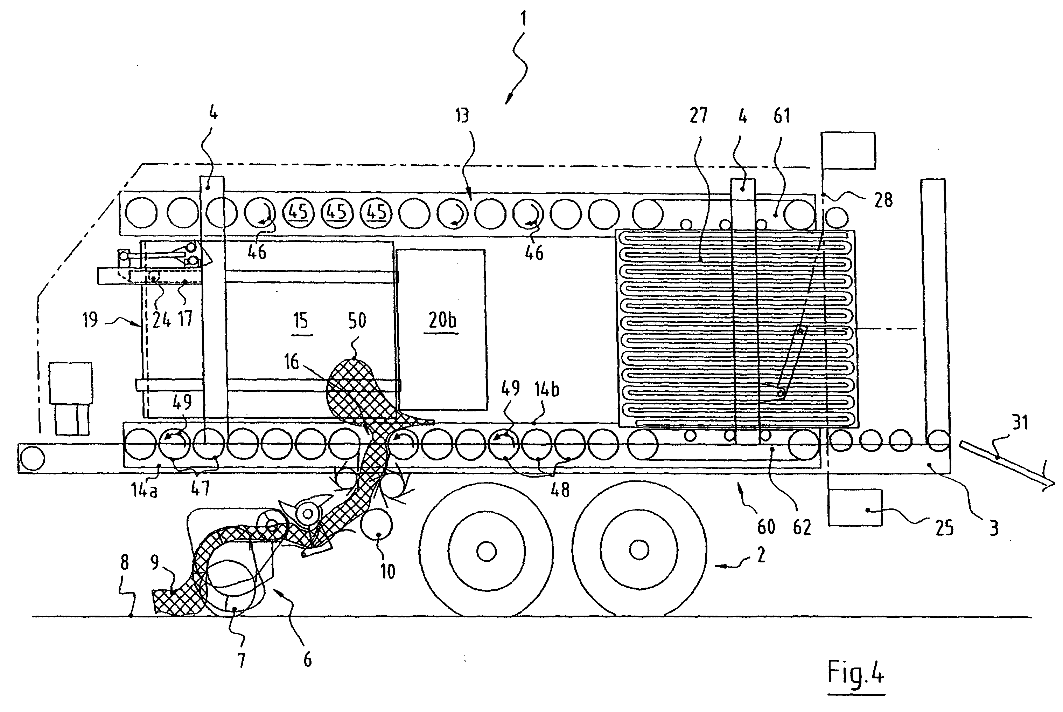

In der Darstellung nach Fig. 4 ist eine alternative Ausführung der erfindungsgemäßen Presse 1 gezeigt, bei der ein Pufferraum 60 von einem oberseitigen und einem unterseitigen Zwischenförderer 61 und 62 begrenzt ist, die sich an die Förderer 13,14 heckseitig anschließen. Die Presse 1 wird dadurch insgesamt verlängert, ein zweiachsiges Fahrgestell 2 kann hierbei empfehlenswert sein. Bei dieser Ausbildung kann die Bindung und der hierfür getaktete Vorschub des Ballens 27 erfolgen, während die Walzen 47 und 48 des unteren Förderers 14 bereits wieder in Richtung der Pfeile 49 ebenso wie die Walzen 45 des oberen Förderers 13 in Richtung der Pfeile 46 fördern. Dadurch kann das inzwischen eingefüllte weitere Gut 50 schneller in die offene Preßkammer 15 gefördert werden, diese kann sofort wieder geschlossen werden und noch während der Bindung des ausgeschobenen Ballens 27 und dessen getakteten Bindevorschubs ihre neuerliche alternierende Bewegung ausführen. Eine derartige Ausbildung der Presse 1 empfiehlt sich insbesondere bei großen Mengen aufzunehmenden Ernteguts, bei der ansonsten während der Bindung des Ballens 27 möglicherweise nicht mit unverminderter Geschwindigkeit weitergefahren werden könnte.

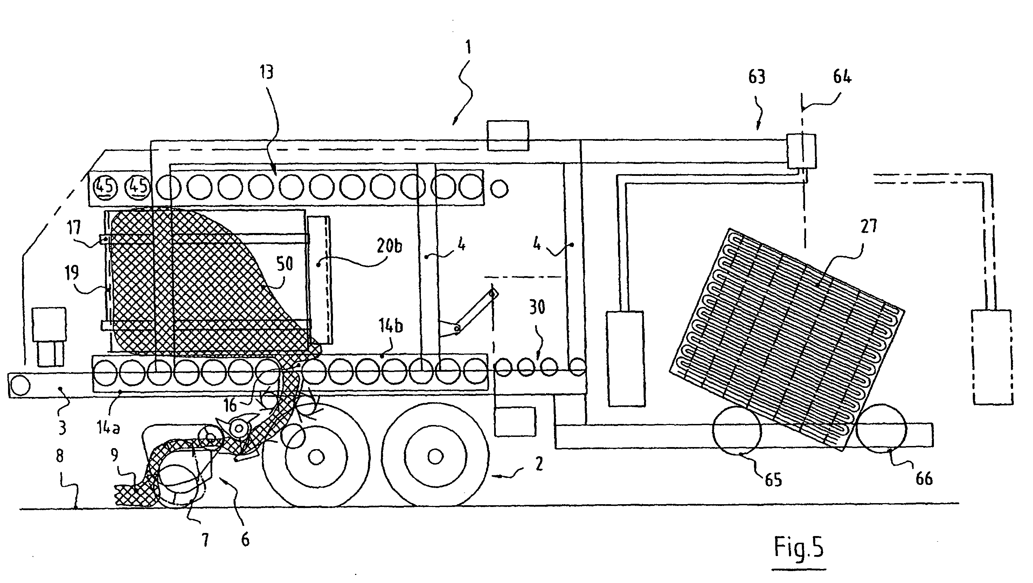

Gemäß Fig. 5 ist eine weitere Alternativausbildung offenbart, die mit der in Fig. 4 kombiniert werden kann, bei der der Bindevorrichtung 25 eine Stretchbahn-Wickelvorrichtung 63 nachgeordnet ist, die den Ballen 27 mit Kunststoffolienbahn umwickelt. Diese Stretchbahn-Wickelvorrichtung ist dem Maschinenrahmen 3 der Presse 1 zugeordnet, so daß insgesamt eine einzige Fahrzeugeinheit erhalten bleibt. Der Wickelarm der Stretchbahn-Wickelvorrichtung 63 rotiert dabei um eine vertikale Achse 64 um den in ihren Wirkungsbereich eingeschobenen und von den Walzen 65,66 in Rotation versetzten Ballen 27.

Für den Antrieb des unteren Förderers 14 und der Bindevorrichtung 25 können Hydraulikmotore 67,68 verwendet werden, wobei die Hydraulikpumpen 69,70 zum Erzeugen des notwendigen Druckes von der Zapfwelle 71 eines Zugfahrzeugs angetrieben sind. Diese kann gleichfalls einen Kettentrieb 72 für den Antrieb der Aufnahmevorrichtung 6 und über einen weiteren Kettentrieb 73 für den Antrieb der Beschickungsvorrichtung 12 aufweisen.

Der obere Förderer 13 erhält bei dem dargestellten Beispiel nach Fig. 3 seinen Antrieb über einen Kettentrieb 74, der von einem Kettenrad angetrieben ist, das von einem Zwischenzahnrad 75 zwischen benachbarten Zahnrädern des Antriebs der Walzen des unteren Förderers 14a,14b angeordnet ist. Von dem unteren Förderer 14 können beispielsweise über Kettentriebe auch der Antrieb für den die Preßkammer 15 bewegenden Ketten- oder Zahnradantrieb 21 abgeleitet sein. Gleichfalls kann der Antrieb des Auslaufförderers 30 von dem Antrieb des benachbarten unteren Teilförderers 14b beispielsweise über einen Kettentrieb 76 abgeleitet sein. Der für die Bindevorrichtung 25 vorgesehene, unabhängig arbeitende Hydromotor 68 treibt die Bindevorrichtung 25 über ein Reibrad 77 an. Auch andere Antriebskonzepte für die einzelnen bewegenden Teile sind in üblicher Weise möglich. So können beispielsweise für den Antrieb Winkelgetriebe mit entsprechenden Wellenverbindungen Einsatz finden.

## Patentansprüche

1. Presse (1) zur Herstellung von im wesentlichen quaderförmigen Preßballen (27) aus landwirtschaftlichem Erntegut (9), insbesondere Halmund/oder Blattgut, mit einer Aufnahmevorrichtung (6) zum Aufnehmen und Weiterbefördern von Erntegut (9), insbesondere bei einem Verfahren der Presse (1) über eine Bodenfläche (8), mit einer Preßkammer (15) zur Bildung von Ballen (27) aus dem aufgenommenen Erntegut (9) und mit einer Beschickungsvorrichtung (12), die durch eine sich über die Breite der Preßkammer (15) erstreckende Beschickungsöffnung (16) das von der Aufnahmevorrichtung (6) aufgenommene Erntegut der Preßkammer (15) zuführt, wobei die Preßkammer (15) relativ zur Beschickungsöffnung (16) der Beschickungsvorrichtung (12) alternierend und annähernd horizontal geradlinig auf einem unteren Förderer (14) beweglich ist, der Förderer (14) eine Förderrichtung aufweist. die zur Bewegungsrichtung der Preßkammer (15) jeweils gleichgerichtet ist und mit deren Richtungsumkehr wechselt, die Beschickungsöffnung (16) im unteren Förderer (14) zwischen zwei Teilförderern (14a;14b) ausgebildet ist und in den Bewegungsumkehrstellungen der Preßkammer (15) jeweils nahe einer benachbarten Querseitenwand (19;20) mit dem Innenraum der Preßkammer (15) in Verbindung steht und zumindest eine Querseitenwand (20) aus ihrer den Innenraum der Preßkammer (15) begrenzenden Schließstellung in eine eine Ausschuböffnung für einen Preßballen (27) freigebende Offenstellung bewegbar ist, **dadurch gekennzeichnet, daß** ein oberer Förderer (13) vorgesehen ist und die Preßkammer zwischen dem oberen und unteren Förderer (13;14) beweglich ist und die Förderer (13;14) den Innenraum der von längs und quer zur Bewegungsrichtung ausgerichteten Längs- und Querseitenwänden (18;19;20) umgrenzten Preßkammer (15) ober- und unterseitig begrenzen.

2. Presse nach Anspruch 1, **dadurch gekennzeichnet, daß** der obere und der untere Förderer (13;14) auf der Ausschubseite der Preßkammer im wesentlichen in einer gemeinsamen Ebene enden und den Förderern eine Bindevorrichtung (25) unmittelbar nachgeordnet ist, deren Bindemittelspender (26) den vorrückenden Preßballen (27) in einer Querebene (28) umkreist.

3. Presse nach Anspruch 1 oder 2, **dadurch gekennzeichnet, daß** zumindest dem unteren Förderer (14) ein in Ballenausschubrichtung hinter der Arbeitsebene (28) der Bindevorrichtung (25) gelegener, gesonderter Auslaufförderer (30) nachgeordnet ist.

4. Presse nach Anspruch 3, **dadurch gekennzeichnet, daß** sich an den Auslaufförderer (30) rückseitig eine Ablaufplatte (31) anschließt, die aus einer annähernd senkrechten Transportstellung in eine abwärts geneigte Betriebsstellung für den Ballenablauf bewegbar ist.

5. Presse nach einem der Ansprüche 1 bis 4, **dadurch gekennzeichnet, daß** die in Offenstellung bewegbare Querseitenwand (20) der Preßkammer (15) von zwei mit den jeweils benachbarten Längsseitenwänden (18) gelenkig verbundenen Klappen (20a;20b) gebildet ist, die in Offenstellung mit den Längsseitenwänden (18) fluchten.

6. Presse nach Anspruch 5, **dadurch gekennzeichnet, daß** die Klappen (20a;20b) mittels eines Antriebs (22) zwischen Schließ- und Offenstellung bewegbar und in diesen Stellungen jeweils arretierbar sind.

7. Presse nach einem der Ansprüche 1 bis 6, **dadurch gekennzeichnet, daß** die Preßkammer (15) an ihren Längsseitenwänden (18) außenseitig mit Führungsrollen (24) versehen ist, die in sich längs der Bewegungsrichtung der Preßkammer (15) erstreckenden Führungsschienen (17) geführt sind.

8. Presse nach Anspruch 7, **dadurch gekennzeichnet, daß** die Führungsrollen (24) in der oberen Hälfte der Preßkammer (15) angeordnet sind und die Preßkammer (15) frei zwischen den Führungsschienen (17) hängend abgestützt ist.

9. Presse nach einem der Ansprüche 1 bis 8, **dadurch gekennzeichnet, daß** sie einen in Höhe des unteren Förderers (14) verlaufenden, diesen umgreifenden Maschinenrahmen (3) umfaßt, an dem Führungsschienen (17) über vertikale Stützstreben (4) abgestützt sind.

10. Presse nach Anspruch 9, **dadurch gekennzeichnet, daß** der Maschinenrahmen (3) unterseitig mit zumindest einem einachsigen Fahrgestell (2) versehen ist, an seiner Unterseite die Aufnahme- (6) und die Beschickungsvorrichtung (12) abstützt und ein anhängbares oder selbstfahrendes Fahrzeug bildet.

11. Presse nach Anspruch 10, **dadurch gekennzeichnet, daß** die Bewegungsrichtung der Preßkammer (15) parallel zur Fahrtrichtung (42) der Presse verläuft.

12. Presse nach Anspruch 11, **dadurch gekennzeichnet, daß** die der Fahrtrichtung (42) abgewandte, rückseitige Querseitenwand (20) der Preßkammer (15) für den Ballenausschub zu öffnen ist.

13. Presse nach einem der Ansprüche 1 bis 12, **dadurch gekennzeichnet, daß** die Ebene der Bewegung der Preßkammer (15) horizontal oder geringfügig zur Seite der zu öffnenden Querseitenwand (20) der Preßkammer (15) hin schräg abfallend verläuft und die Förderer (13;14) parallel zu dieser Bewegungsebene ausgerichtete Förderebenen aufweisen.

14. Presse nach einem der Ansprüche 1 bis 13, **dadurch gekennzeichnet, daß** in den Umkehrstellungen der Preßkammer (15) jeweils eine der Querseitenwände (19;20) im wesentlichen mittig über der Beschickungsöffnung (16) gelegen ist.

15. Presse nach einem der Ansprüche 1 bis 14, **dadurch gekennzeichnet, daß** die Preßkammer (15) im Bereich ihrer in Fahrtrichtung (42) vorderen Umkehrstellung feststellbar und ein in der Preßkammer (15) gebildeter Preßballen (27) nach Öffnen der rückseitigen Querseitenwand (20) mittels des unteren (14) und des oberen Förderers (13) aus der Preßkammer (15) heraus und durch die Bindevorrichtung (25) hindurch bewegbar ist.

16. Presse nach einem der Ansprüche 1 bis 15, **dadurch gekennzeichnet, daß** der Ballenausschub während des Betriebs von Aufnahme- (6) und Beschickungsvorrichtung (12) erfolgt.

17. Presse nach Anspruch 15 oder 16, **dadurch gekennzeichnet, daß** nach Ausschub des Ballens die Preßkammer (15) geschlossen und wieder in alternierende Bewegung versetzt wird.

18. Presse nach einem der Ansprüche 15 bis 17, **dadurch gekennzeichnet daß** das Schließen der Kammer (15) nach einem Ausschub des Ballens (27) aus dem Zwischenraum zwischen dem oberen (13) und dem unteren Förderer (14) und einem darauffolgenden Umkehren der Förderrichtung der Förderer (13;14) und ein dadurch herbeigeführtes Überführen des während des Ballenausschubes auf dem unteren Förderer (14) gesammelten, losen Erntegutes (50) in die Preßkammer (15) vorgenommen wird.

19. Presse nach einem der Ansprüche 1 bis 18, **dadurch gekennzeichnet, daß** zumindest einer der Förderer (13;14) als Walzenförderer ausgebildet ist.

20. Presse nach einem der Ansprüche 1 bis 18, **dadurch gekennzeichnet, daß** zumindest einer der Förderer (13;14) als Stabkettenförderer ausgebildet ist.

21. Presse nach einem der Ansprüche 1 bis 18, **dadurch gekennzeichnet, daß** zumindest einer der Förderer (13;14) als Bandförderer ausgebildet ist.

22. Presse nach einem der Ansprüche 1 bis 21, **dadurch gekennzeichnet, daß** der obere (13) und der untere Förderer (14) unterschiedliche Ausbildung aufweisen.

23. Presse nach einem der Ansprüche 1 bis 22, **dadurch gekennzeichnet, daß** die unterseitigen Teilförderer (14a;14b) eine unterschiedliche Ausbildung aufweisen.

24. Presse nach Anspruch 23, **dadurch gekennzeichnet, daß** als untere Teilförderer (14a;14b) Walzenförderer und als oberer Förderer (13) ein Stabkettenförderer vorgesehen ist.

25. Presse nach einem der Ansprüche 20 bis 24, **dadurch gekennzeichnet, daß** bei Einsatz eines Stabkettenförderers als oberer Förderer (13) zwischen den der Preßkammer (15) gegenüberliegenden Stäben (13a) Tuchelemente (13c) zur Abdeckung der Zwischenräume vorgesehen sind.

26. Presse nach einem der Ansprüche 1 bis 25, **dadurch gekennzeichnet, daß** dem unteren (14) und dem oberen Förderer (13) ein unterer und oberer Zwischenförderer (61;62) nachgeordnet ist, die einen Pufferraum (60) unterund oberseitig begrenzen.

27. Presse nach Anspruch 26, **dadurch gekennzeichnet, daß** den Zwischenförderern (61;62) die Bindevorrichtung (25) nachgeordnet ist.

28. Presse nach einem der Ansprüche 1 bis 22, **dadurch gekennzeichnet, daß** der Bindevorrichtung (25) eine Stretchbahn-Wickelvorrichtung (63) nachgeordnet ist.

29. Presse nach einem der Ansprüche 1 bis 28, **dadurch gekennzeichnet, daß** zum alternierenden Antrieb der Preßkammer ein endloser Kettentrieb (21) vorgesehen und die Preßkammer (15) mittels einer Mitnahmeklinke (21a) mit einem Mitnahmezapfen (21b) des Kettentriebs kuppelbar ist.

30. Presse nach Anspruch 29, **dadurch gekennzeichnet, daß** die Mitnahmeklinke (21 a) mittels eines Antriebs in und außer Kupplungseingriff mit dem Mitnahmezapfen (21b) bewegbar ist.

31. Presse nach einem der Ansprüche 1 bis 30, **dadurch gekennzeichnet, daß** zum Antrieb des unteren Förderers (14) bzw. seiner Teilförderer (14a;14b) ein von einer Hydraulikpumpe gespeister Hydromotor vorgesehen ist, von dem über einen Kettentrieb der Antrieb für den die Preßkammer (15) bewegenden Ketten- oder Zahnradantrieb (21) und der Antrieb für den oberen Förderer (13) abgeleitet ist.

32. Presse nach Anspruch 31, **dadurch gekennzeichnet, daß** der Antrieb des Auslaufförderers (30) vom Antrieb des benachbarten unteren Teilförderers (14b) über einen Kettentrieb abgeleitet ist.

33. Presse nach Anspruch 31 oder 32, **dadurch gekennzeichnet, daß** als Antrieb für die Bindevorrichtung (25) ein von einer gesonderten Hydraulikpumpe gespeister Hydromotor vorgesehen ist.

34. Presse nach einem der Ansprüche 31 bis 33, **dadurch gekennzeichnet, daß** bei Ausbildung der Presse (1) als Anhängerfahrzeug die Hydraulikpumpen von der Zapfwelle eines Zugfahrzeugs angetrieben sind, die auch einen Kettentrieb für den Antrieb der Aufnahmevorrichtung (6) und der Beschickungsvorrichtung (12) antreibt.

## Claims

1. Press (1) for the production of essentially rectangular compressed bales (27) of harvested crop (9) and, in particular, of stalk- and / or leaf material provided with a pick-up device (6) for lifting and conveying the harvested crop in particular when the press is travelling over a ground surface (8) together with a baling chamber (15) for forming bales (27) from the picked-up harvested crop, and with a feeding device (12) for the harvested crop (9) which guides the harvested crop lifted by the pick-up device (6) to the baling chamber via a feeding aperture (16) which extends over the width of the baling chamber (15) whereby - relative to the feeding aperture (16) of the feeding device (12) - the baling chamber (15) is capable of being moved in opposite directions along an approximately straight horizontal path over a lower conveyor (14) and the conveyor (14) moves in a delivery direction which is always the same as the direction of movement of the baling chamber (15) and changes its own direction of travel when the latter reverses its direction of travel and the feeding aperture (16) in the lower conveyor (14) is located between two sub- conveyors (14a; 14b) such that whenever the movement-reversal positions of the baling chamber are reached it is connected to the inner space within the baling chamber (15) in the vicinity of the respective adjacent transverse side-wall (19; 20) and at least one transverse side-wall (20) is capable of movement (20) out of its closed position defining the inner space of the baling chamber (15) into an open position allowing for a compressed bale (27) to be discharged, **characterised in that** an upper conveyor (13) is provided and the baling chamber is capable of movement between the upper and the lower conveyors (13;14) and the conveyors (13; 14) define the top and bottom faces of the inner space of the baling chamber (15) consisting of the longitudinal and lateral walls (18; 19; 20) disposed parallel to and at right-angles to the direction of movement.

2. Press in accordance with claim 1, **characterised in that** at the discharge side of the baling chamber the upper and lower conveyors (13;14) terminate essentially in a common plane and that a binder device (25) is installed immediately following the conveyors with the dispenser (26) for the binder material encircling the emerging compressed bale (27) within a lateral plane (28).

3. Press in accordance with claim 1 or 2, **characterised in that** at least the lower conveyor (14) is followed by a separate discharge conveyor situated sequentially behind the working plane (28) of the binder device (25) and operating in the direction in which the bale is discharged.

4. Press in accordance with claim 3, **characterised in that** a discharge plate (31) connects to the rear of the discharge conveyor (30) which discharge plate is capable of moving from an approximately vertical transport position into a downwards-inclined operating position for the discharge of the bales.

5. Press in accordance with one of the claims 1 to 4, **characterised in that** the lateral side-wall (20) of the baling chamber (15) capable of moving into the open position is formed by two flaps (20a; 20b) connected by articulated joints with the respective adjacent longitudinal side-walls (18) which flaps lie flush with the longitudinal side-walls (18) when in the open position.

6. Press in accordance with claim 5, **characterised in that** the flaps (20a; 20b) are capable of being moved between the closed- and open positions by a drive (22) and may be secured in each of these respective positions.

7. Press in accordance with one of claims 1 to 6, **characterised in that** each outside longitudinal side-wall (18) of the baling chamber (15) is provided with guide rolls (24) which follow guide rails (17) which extend along the direction of movement of the baling press (15).

8. Press in accordance with claim 7, **characterised in that** the guide rolls (24) are arranged in the upper half of the baling chamber (15) and the baling chamber (15) is supported by being suspended between the guide rails (17).

9. Press in accordance with claims 1 to 8, **characterised in that** it comprises a machine frame (3) extending at the height of the lower conveyor (14) and surrounding said conveyor, supported by the guide rail (17) with the aid of vertical struts (4).

10. Press in accordance with claim 9, **characterised in that** the bottom of the machine frame 3 is provided with a chassis (2) having at least one axle and that the underside of the chassis supports the pick-up- and feeding device (12) with the whole constituting an attachable- or self-driven vehicle.

11. Press in accordance with claim 10, **characterised in that** the direction of movement of the baling chamber (15) runs parallel to the direction of travel (42) of the press.

12. Press in accordance with claim 11, **characterised in that** the rearmost transverse side-wall (20) of the baling chamber (15) facing away from the direction of travel (42) can open to allow the bale to be discharged.

13. Press in accordance with one of the claims 1 to 12, **characterised in that** the plane of movement of the baling chamber (15) is horizontal or very slightly inclined downwards to the side of the transverse side-wall (20) of the baling chamber (15) and that the conveyors (13; 14) exhibit delivery planes in parallel alignment with this movement plane.

14. Press in accordance with one of the claims 1 to 13, **characterised in that** in the positions where reversal of the baling chamber (15) takes place, one of the respective transverse side-walls (19; 20) is positioned essentially centrally above the feeding aperture (16)

15. Press in accordance with one of the claims 1 to 14, **characterised in that** the baling chamber (15) can be secured in the area of its front reversing position - as determined by the direction of vehicle travel - and a compressed bale (27) produced in the baling chamber (15) can be moved by the lower- (14) and upper (15) conveyors out of the baling chamber (15) and through the binder device (25) after the rear transverse side-wall (20) has been opened.

16. Press in accordance with one of the claims 1 to 15, **characterised in that** the discharge of the bales takes place during the operation of the pick-up (6) and feeding device (12).

17. Press in accordance with claim 15 or 16, **characterised in that** following the discharge of a bale, the chamber (15) is closed and the movement in alternating directions is resumed.

18. Press in accordance with one of the claims 15 to 17, **characterised in that** the following activities are undertaken, namely closure of the chamber (15) following the discharge of the bale (27) from the intermediate space between the upper (13) and lower (14) conveyors, a subsequent reversal of the forwarding direction of the conveyors (13; 14) and, resulting from the above, transfer into the baling chamber (15) of the loose harvested crop (50) which accumulates on the lower conveyor (14) during the bale-discharge activity.

19. Press in accordance with one of the claims 1 to 18 **characterised in that** at least one of the conveyors (13; 14) takes the form of a roller conveyor.

20. Press in accordance with one of the claims 1 to 18, **characterised in that** at least one of the conveyors (13; 14) takes the form of a chain-and-slat conveyor.

21. Press in accordance with one of the claims 1 to 18, **characterised in that** at least on of the conveyors (13; 14) takes the form of a belt conveyor.

22. Press in accordance with one of the claims 1 to 21, **characterised in that** the upper conveyor (13) and the lower conveyor (14) are dissimilar in design.

23. Press in accordance with claims 1 to 22, **characterised in that** the lower sub-conveyors (14a; 14b) are dissimilar in design.

24. Press in accordance with claim 23, **characterised in that** roller conveyors are provided as the lower sub-conveyors (14a; 14b) and a chain-and-slat conveyor is provided as the upper conveyor (13).

25. Press in accordance with one ofthe claims 20 to 24, **characterised in that** if a chain-and-slat conveyor is installed as the upper conveyor (13) cloth elements (13c) are provided between the slats (13a) opposite the baling chamber (15) to cover the intermediate spaces.

26. Press in accordance with one of the claims 1 to 25, **characterised in that** a lower and upper intermediate conveyor (61; 62) follows the lower (14) and upper conveyor (13) which delineate a lower- and an upper buffer space (60).

27. Press in accordance with claim 26, **characterised in that** the binder device (25) is arranged sequentially behind the intermediate conveyors (61; 62).

28. Press in accordance with one of the claims 1 to 22, **characterised in that** the binder device follows a stretch film device (63).

29. Press in accordance with one of the claims 1 to 28, **characterised in that** the alternating-direction drive to the baling chamber (15) is provided in the form of an endless chain drive (21) and the baling chamber can be connected to this by means of a pawl (21a) and ratchet (21b) device.

30. Press in accordance with claim 29, **characterised in that** the pawl (21a) can be engaged with or disengaged from the coupling procedure with the ratchet (21b) by means of a drive.

31. Press in accordance with one of the claims 1 to 30, **characterised in that** a hydromotor powered by a hydraulic pump is provided to drive the lower conveyor (14) or its sub-conveyors (14a; 14b) and the hydromotor also powers both the drive for the chain- or gear drive (21) which moves the baling chamber (15) via a chain drive which in turn actuates the chain- or gear drive (21) for the baling chamber and the drive for the upper conveyor (13).]

32. Press in accordance with claim 31, **characterised in that** the drive ofthe discharge conveyor (30) is derived, via a chain drive, from the drive for the adjacent lower sub-conveyor(14b).

33. Press in accordance with claim 31 or 32, **characterised in that** a hydromotor powered by a separate hydraulic pump is provided for the drive for the binder device (25).

34. Press in accordance with one of the claims 31 to 33, **characterised in that** in constructing the press (1) as a trailer vehicle the hydraulic pumps are driven by the power-take-off shaft of a towing vehicle which also powers a chain drive for the pick-up device (6) and the feeding device (12).

## Revendications

1. Presse (1) de mise en bottes (27) sensiblement rectangulaires de produit de récolte (9) agricole, en particulier un produit de tige et/ou de feuille, présentant un dispositif de réception (6) pour recevoir et transporter plus loin un produit de récolte (9), en particulier lors d'un déplacement de la presse (1) sur une surface de sol (8), une chambre de compression (15) pour former des bottes (27) de produit de récolte (9) reçu et un dispositif d'alimentation (12) qui amène le produit de récolte reçu par le dispositif de réception à la chambre de compression (15) à travers une ouverture d'alimentation (16) s'étendant sur la largeur de la chambre de compression (15), la chambre de compression (15) pouvant se mouvoir alternativement et environ horizontalement en ligne droite par rapport à l'ouverture d'alimentation (16) sur un transporteur inférieur (14), le transporteur (14) présentant une direction de transport qui est orientée à chaque fois de la même façon que le sens du mouvement de la chambre de compression (15) et qui change avec son inversion de sens de mouvement, l'ouverture d'alimentation (16) dans le transporteur inférieur (14) étant configurée entre deux transporteurs partiels (14a; 14b) et étant en liaison avec l'espace intérieur de la chambre de compression (15) aux positions d'inversion de mouvement à chaque fois à proximité d'une paroi latérale transversale (19; 20) voisine et au moins une paroi latérale transversale (20) pouvant se mouvoir depuis sa position de fermeture délimitant l'espace intérieur de la chambre de compression (15) dans une position d'ouverture libérant une ouverture pour éjecter une botte (27), **caractérisée en ce que** un transporteur supérieur (13) est prévu et la chambre de compression peut se mouvoir entre le transporteur supérieur (13) et le transporteur inférieur (14), les transporteurs (13; 14) limitant vers le haut et vers le bas l'espace intérieur de la chambre de compression (15) délimitée par des parois latérales transversales (19; 20) et des parois latérales longitudinales (18), orientées transversalement et longitudinalement par rapport au sens du mouvement.

2. Presse selon la revendication 1, **caractérisée en ce que** les transporteurs supérieur et inférieur (13; 14) se terminent sur le côté éjection de la chambre de compression essentiellement en un plan commun et un dispositif lieur (25) dont le distributeur (26) en moyen de liaison entoure en un plan transversal (28) les bottes (27) s'avançant, est disposé immédiatement en aval des transporteurs.

3. Presse selon la revendication 1 ou 2, **caractérisée en ce qu'**un transporteur de sortie (30) séparé et situé derrière le plan de fonctionnement (28) du dispositif lieur (25) dans le sens de l'éjection des bottes, est disposé au moins en aval du transporteur inférieur (14).

4. Presse selon la revendication 3, **caractérisée en ce qu'**une plaque de sortie (31) qui peut se mouvoir depuis une position de transport approximativement verticale en une position de fonctionnement inclinée vers l'aval pour le déchargement des bottes, se raccorde au transporteur de sortie (30) sur son côté arrière.

5. Presse selon l'une quelconque des revendications 1 à 4, **caractérisée en ce que** la paroi latérale transversale (20) de la chambre de compression (15) pouvant se mouvoir en position d'ouverture est formée de deux volets (20a; 20b) raccordés par charnière aux parois latérales longitudinales (18) voisines respectives et s'alignant en position d'ouverture sur les parois latérales longitudinales (18).

6. Presse selon la revendication 5, **caractérisée en ce que** les volets (20a; 20b) peuvent se mouvoir au moyen d'un dispositif d'entraînement (22) entre une position de fermeture et une position d'ouverture et peuvent chacun être bloqués dans ces positions.

7. Presse selon l'une quelconque des revendications 1 à 6, **caractérisée en ce que** la chambre de compression (15) est pourvue sur ses parois latérales longitudinales (18) sur leurs côtés extérieurs, de galets de guidage (24) qui sont guidés dans des rails de guidage (17) s'étendant le long du sens du mouvement.

8. Presse selon la revendication 7, **caractérisée en ce que** les galets de guidage (24) sont disposés dans la moitié supérieure de la chambre de compression (15) et la chambre de compression (15) est supportée en étant suspendue librement entre les rails de guidage (17).

9. Presse selon l'une quelconque des revendications 1 à 8, **caractérisée en ce qu'**elle comprend un bâti de machine (3) s'étendant au niveau du transporteur inférieur (14) et incluant celui-ci, bâti sur lequel des rails de guidage (17) s'appuient par l'intermédiaire de montants d'appui verticaux (4).

10. Presse selon la revendication 9, **caractérisée en ce que** le bâti de machine (3) est pourvu sur son côté inférieur d'au moins un châssis (2) à un essieu, sur le côté inférieur duquel s'appuient le dispositif de réception (6) et le dispositif d'alimentation (12), et forme un véhicule pouvant être accroché ou un véhicule automoteur.

11. Presse selon la revendication 10, **caractérisée en ce que** le sens du mouvement de la chambre de compression (15) s'étend parallèlement au sens du déplacement (42) de la presse.

12. Presse selon la revendication 11, **caractérisée en ce que** la paroi latérale transversale arrière (20) opposée au sens du déplacement (42), de la chambre de compression (15) doit s'ouvrir pour l'éjection des bottes.

13. Presse selon l'une quelconque des revendications 1 à 12, **caractérisée en ce que** le plan du mouvement de la chambre de compression (15) s'étend parallèlement horizontalement et de façon légèrement inclinée en oblique vers le côté de la chambre de compression (15) correspondant à la paroi latérale transversale (20) à ouvrir et les transporteurs (13; 14) présentent des plans de transport orientés parallèlement à ce mouvement.

14. Presse selon l'une quelconque des revendications 1 à 13, **caractérisée en ce que** dans les positions d'inversion de la chambre de compression (15) l'une des parois latérales transversales (19; 20) se trouve sensiblement au milieu au-dessus de l'ouverture d'alimentation (16).

15. Presse selon l'une quelconque des revendications 1 à 14, **caractérisée en ce que** la chambre de compression (15) peut être fixée dans la zone de sa position d'inversion avant dans le sens du déplacement (42) et une botte (27) formée dans la chambre de compression (15) peut se mouvoir en aval de l'ouverture de la paroi latérale transversale arrière (20), au moyen du transporteur inférieur (14) et du transporteur supérieur (13) hors de la chambre de compression (15) à travers le dispositif lieur (25).

16. Presse selon l'une quelconque des revendications 1 à 15, **caractérisée en ce que** l'éjection des bottes se produit pendant le fonctionnement du dispositif de réception (6) et du dispositif d'alimentation (12).

17. Presse selon la revendication 15 ou 16, **caractérisée en ce que** la chambre de compression (15) se ferme après l'éjection de la botte et est à nouveau déplacée en un mouvement alternatif.

18. Presse selon l'une quelconque des revendications 15 à 17, **caractérisée en ce que** l'on effectue la fermeture de la chambre (15) après l'éjection de la botte (27) de l'espace intermédiaire entre le transporteur supérieur (13) et le transporteur inférieur (14) et après une inversion consécutive à cela du sens du transport des transporteurs (13; 14) et un transfert entraîné par cela du produit de récolte (50) en vrac collecté pendant l'éjection de la botte sur le transporteur inférieur (14) dans la chambre de compression (15).

19. Presse selon l'une quelconque des revendications 1 à 18, **caractérisée en ce qu'**au moins l'un des transporteurs (13; 14) est conformé en tant que transporteur à rouleaux.

20. Presse selon l'une quelconque des revendications 1 à 18, **caractérisée en ce qu'**au moins l'un des transporteurs (13; 14) est conformé en tant que transporteur à chaîne à barres.

21. Presse selon l'une quelconque des revendications 1 à 18, **caractérisée en ce qu'**au moins l'un des transporteurs (13; 14) est conformé en tant que transporteur à bande.

22. Presse selon l'une quelconque des revendications 1 à 21, **caractérisée en ce que** le transporteur supérieur (13) et le transporteur inférieur (14) présentent une conformation différente.

23. Presse selon l'une quelconque des revendications 1 à 22, **caractérisée en ce que** les transporteurs partiels inférieurs (14a; 14b) présentent une conformation différente.

24. Presse selon la revendication 23, **caractérisée en ce que** des transporteurs à rouleaux sont prévus en tant que transporteurs partiels inférieurs (14a; 14b) et un transporteur à chaîne à rouleaux est prévu en tant que transporteur supérieur (13).

25. Presse selon l'une quelconque des revendications 20 à 24, **caractérisée en ce qu'**en cas d'utilisation d'un transporteur à chaîne à barres en tant que transporteur supérieur (13) des éléments d'étoffe (13c) sont prévus entre les barres (13a) faisant face à la chambre de compression (15) afin de recouvrir les espaces intermédiaires.

26. Presse selon l'une quelconque des revendications 1 à 25, **caractérisée en ce qu'**un transporteur intermédiaire inférieur (62) et un transporteur intermédiaire supérieur (61) sont disposés en aval du transporteur inférieur (14) et du transporteur supérieur (15), lesdits transporteurs intermédiaires délimitant un espace tampon (60) vers le bas et vers le haut.

27. Presse selon la revendication 26, **caractérisée en ce qu'**un dispositif lieur (25) est disposé en aval des transporteurs intermédiaires (61 ;62).

28. Presse selon l'une quelconque des revendications 1 à 22, **caractérisée en ce qu'**un dispositif d'enroulement (63) au moyen d'une bande tendue est disposé en aval du dispositif lieur (25).

29. Presse selon l'une quelconque des revendications 1 à 28, **caractérisée en ce qu'**une transmission à chaîne sans fin (21) est prévue pour l'entraînement alternatif de la chambre de compression (15) et la chambre de compression (15) peut être accouplée au moyen d'un cliquet d'accrochage (21a) à un tenon d'accrochage (21b) de la transmission à chaîne.

30. Presse selon la revendication 29, **caractérisée en ce que** le cliquet d'accrochage (21a) peut se mouvoir au moyen d'un dispositif d'entraînement en prise d'accouplement et hors prise d'accouplement avec le tenon d'accrochage (21b).

31. Presse selon l'une quelconque des revendications 1 à 30 **caractérisée en ce qu'**un moteur hydraulique alimenté par une pompe hydraulique, duquel sont dérivés par l'intermédiaire d'une transmission à chaîne l'entraînement pour la transmission à engrenage ou à chaîne déplaçant la chambre de compression (15) et l'entraînement pour le transporteur supérieur (13), est prévu pour l'entraînement respectivement du transporteur inférieur (14) et de ses transporteurs partiels (14a; 14b).

32. Presse selon la revendication 31, **caractérisée en ce que** l'entraînement du transporteur de sortie (30) est dérivé de l'entraînement du transporteur inférieur voisin (14b) par l'intermédiaire d'une transmission à chaîne.

33. Presse selon la revendication 31 ou 32, **caractérisée en ce qu'**un moteur hydraulique alimenté par une pompe hydraulique séparée est prévu en tant que dispositif d'entraînement pour le dispositif lieur (25).

34. Presse selon l'une quelconque des revendications 31 à 33, **caractérisée en ce qu'**en cas de conformation de la presse (1) comme véhicule à remorque, les pompes hydrauliques sont entraînées par l'arbre de prise de mouvement d'un véhicule tracteur, qui entraîne également une transmission à chaîne pour l'entraînement du dispositif de réception (6) et du dispositif d'alimentation (12).
